# EUROPÄISCHE PATENTSCHRIFT

(11) **EP 1 033 523 B1**
(45) Veröffentlichungstag und Bekanntmachung des Hinweises auf die Patenterteilung: **26.03.2003**
(21) Anmeldenummer: 00250070.0
(22) Anmeldetag: 28.02.2000
(51) Int. Cl.: F16L 55/165, E03F 3/06

(54) **Verfahren und Vorrichtung zum Sanieren von erdverlegten Rohrleitungen**
Reconstruction process and device for underground pipelines
Procédé et dispositif d'assainissement pour conduits enterrés

(30) Priorität: 04.03.1999 DE 19911442
(43) Veröffentlichungstag der Anmeldung: 06.09.2000
(73) Patentinhaber: Berliner Wasserbetriebe Anstalt des öffentlichen Rechts, 10179 Berlin (DE)
(72) Erfinder: Sedehizade, Fereshte, Dipl.-Ing., 13189 Berlin (DE)

(56) Entgegenhaltungen:
- DE-A- 3 707 601
- DE-U- 29 817 126

## Beschreibung

Die Erfindung betrifft ein Verfahren zum Sanieren von erdverlegten Rohrleitungen, insbesondere von erdverlegten Wasserversorgungsleitungen, Entwässerungskanälen und Gasleitungen, in denen Lichtwellenleiter (LWL) -Kabel verlegt sind und eine Vorrichtung zur Durchführung dieses Verfahrens.

Es ist nach der DE 35 13 956 bekannt, erdverlegte Rohrleitungen mittels in Harz getränkten, mit einer Innen- und Außenfolie versehenen Filz- oder Glasfaserinliner zu sanieren.
Ein derartiges Verfahren ist weiterhin unter "Auskleidung mit örtlich hergestellten und erhärteten Rohren" bekannt (Instandhaltung von Kanalisation; Stein, Niederehe, 2. Auflage; Ernst & Sohn Verlag für Architektur und technische Wissenschaften Berlin; Seiten 512 bis 528).
Bei diesen Verfahren wird ein konfektioniertes, flexibles, in Kunstharz getränktes Trägermaterial, beispielsweise Nadelfilzgewebe- oder Glasfaser, in Schlauchform im Umstülpverfahren oder mittels einer Seilwinde in die zu sanierende Haltung eingebracht, mit Wasser- oder Luftdruck aufgeweitet und an das alte Rohr angedrückt. Nach dem Erhitzen des Wassers oder durch Ziehen einer UV-Lichtquelle erhärtet der Inliner innerhalb von 5 bis 8 Stunden und kann nach Öffnen der Anschlüsse die Funktion des alten Rohres übernehmen.
Diese Verfahren können bei Leitungen, in denen sich LWL-Kabel befinden, nicht angewendet werden, weil es zur Beulen- und/oder Faltenbildung am Inliner über dem Kabel kommt, wodurch sich beim Inliner kein voller Kreisquerschnitt ergibt, der aber eine Grundvoraussetzung für die statische Tragfähigkeit ist.

Aufgabe der Erfindung ist es deshalb, ein Verfahren und eine Vorrichtung zum Sanieren von erdverlegten Rohrleitungen, in denen sich LWL-Kabel befinden, anzugeben.

Erfindungsgemäß wird die Aufgabe dadurch gelöst, daß ein bekannter mit Harz getränkter und mit einer Innen- und Außenfolie versehener in Längsrichtung offener Inliner an beiden Seiten in spreizbare Elemente einer Vorrichtung, in Abhängigkeit von der Länge und dem jeweiligen Rohrumfang eingeführt und unter dieser zusammengefaltet wird und nach Einbringen in das zu sanierende Rohr durch Drehbewegung unter das Kabel zusammengeführt und die beiden Seiten dicht verschlossen werden. Der Inliner wird danach mit Heißluft durchströmt, um den Aushärtungsprozeß des Harzes zu beschleunigen.
Die erfindungsgemäße Vorrichtung besteht aus kreissegmentförmigen, teleskopartigen Elementen mit an den Enden angeordneten Halteklammern sowie aus Rundstäben, wobei ein Ende am inneren Segment der teleskopartigen Elemente und das andere Ende mit einer längs an der Kanallänge laufenden Mittelwelle verbunden ist. In den äußeren Segmenten sind zur Unterstützung des Aufgehens Federn angeordnet.
Zur Verhinderung des weiteren Aufgehens der teleskopartigen Elemente sind zwischen den inneren Segmenten zweier Elemente Querstäbe angeordnet, wenn diese den Inliner durch das Umlenken des Kabels nicht am Scheitel des Rohres, sondern am Kämpfer zusammenführen.

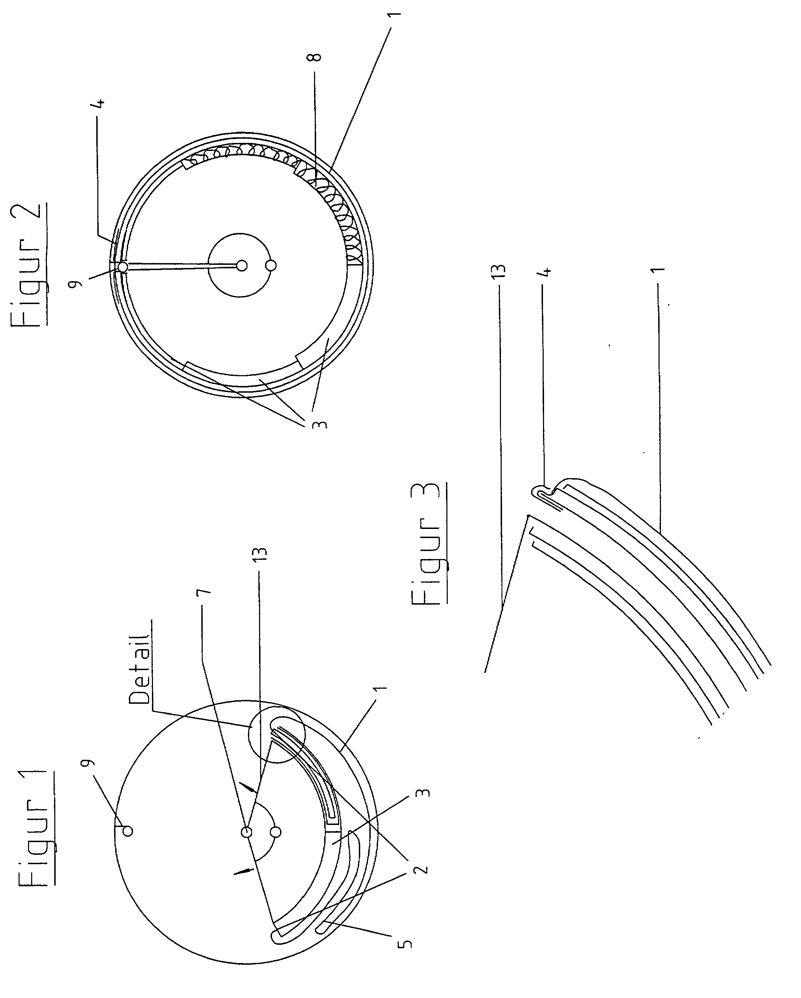

Die Erfindung soll nachstehend an einem Ausführungsbeispiel näher erläutert werden.
Es zeigen
- Figur 1:: den vorbereiteten Inliner in einem zu sanierenden Rohr
- Figur 2:: den voll ausgefahrenen Inliner
- Figur 3:: ein Detail gemäß Figur 1
- Figur 4:: das Einbringen und das Positionieren des Inliners im Rohr
- Figur 5:: das Aufweiten des Inliners im Rohr

Der an sich bekannte, mit Harz getränkte, mit einer Innen- und Außenfolie versehene und in Längsrichtung offener Inliner 1 ist an beiden Seiten 2 der kreissegmentförmigen, teleskopartigen Elemente 3 mittels Klammern 4 befestigt und unter diesen Elementen 3 zusammengefaltet 5.

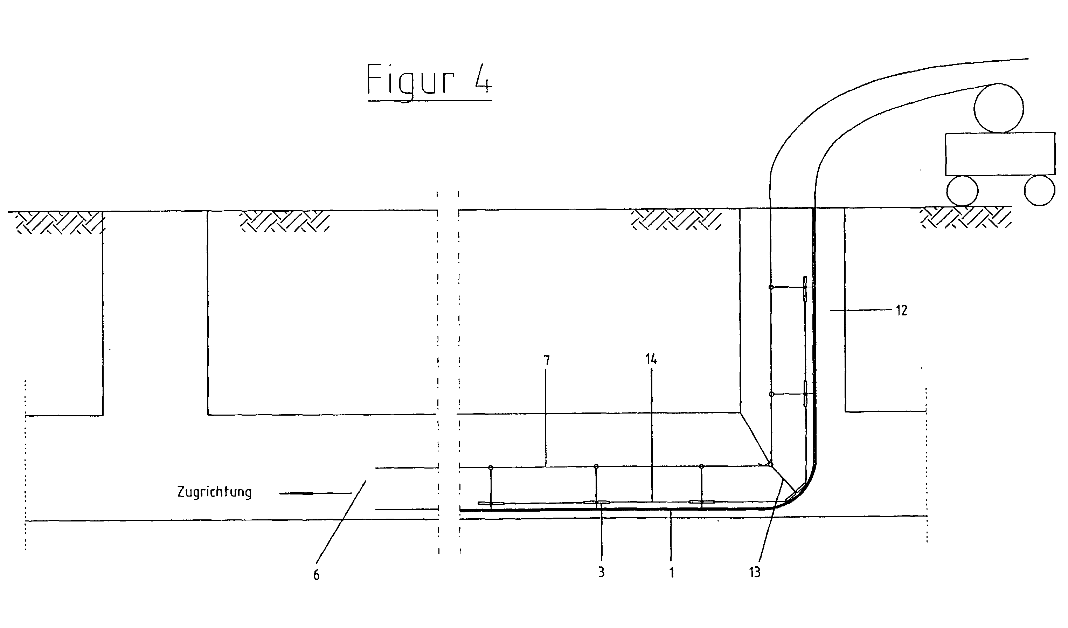

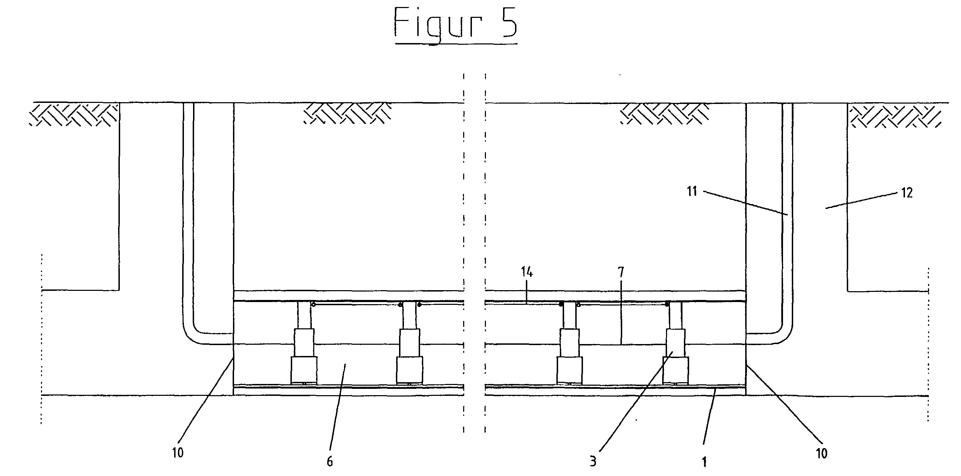

Die Elemente 3 mit dem befestigten Inliner 1 werden mittels einer bekannten Seilwinde in das zu sanierende Rohr 6 eingebracht.
Durch die Drehbewegung einer Mittelwelle 7 und mit Hilfe einer in der äußeren Elementen 3 angeordneten Feder 8 werden die beiden Seiten 2 des Inliners 1 unter das Kabel 9 geführt und dicht verschlossen (Figur 2).
Die Enden der aufgeweiteten Elemente 3 werden mit an sich bekannten Platten 10 (Figur 5) in deren Mitte sich Öffnungen für Versorgungs- und Abluftschläuche 11 befinden, luftdicht verschlossen.
Danach erfolgt die Aushärtung des Harzes durch Zuführung von Heißluft über den Versorgungsschlauch 11 (Figur 5).
Figur 4 zeigt das Einbringen des vorbereiteten Inliners 1 aus einem Einstiegsschacht 12 in das zu sanierende Rohr 6. Ein Rundstab 13 dient beim Aufdrehen der Elemente 3 zur Führung und Stabilisierung der Mittelwelle 7. Ein Querstab 14 dient dazu, die teleskopartigen Elemente 3 am weiteren Aufgehen zu hindern, wenn dieser den Inliner 1 durch das Umlenken des Kabels 9 nicht am Scheitel des Rohres 6, sondern am Kämpfer zusammenführen sollen.

## Patentansprüche

1. Verfahren zum Sanieren von erdverlegten Rohrleitungen, in denen sich Lichtwellenleiter -Kabel befinden, unter Verwendung von mit Harz getränkten und mit einer Innen- und Außenfolie versehenen Inlinermaterial,
bei welchem
ein in Längsrichtung offener Inliner (1) an beiden Seiten (2) in Abhängigkeit von der Länge und dem jeweiligen Rohrumfang kreissegmentförmige, teleskopartige Elemente (3) einer Vorrichtung eingeführt und unter dieser zusammengefaltet wird (5) und nach Einbringen in das zu sanierende Rohr (6) die beiden Seiten durch Drehbewegung unter das Kabel (9) geführt und dicht verschlossen werden.

2. Vorrichtung zur Durchführung des Verfahrens nach Anspruch 1,
bei welcher
kreissegmentförmige, teleskopartige Elemente (3) mit an den Enden angeordneten Halteklammern (4) sowie Rundstäbe angeordnet sind, wobei ein Ende am inneren Segment der teleskopartigen Elemente und das andere Ende mit einer längs an der Kanallänge laufenden Mittelwelle (7) verbunden ist.

3. Vorrichtung nach Anspruch 2,
bei welcher
im äußeren Segment zur Unterstützung des Aufgehens Federn (8) angebracht sind.

4. Vorrichtung nach den Ansprüchen 2 und 3,
bei welcher
Querstäbe (14) zur Verhinderung des weiteren Aufgehens der teleskopartigen Elemente (3), wenn diese den Inliner (1) durch das Umlenken des Kabels (9) nicht am Scheitel des Rohres (6), sondern am Kämpfer zusammenführen, angeordnet sind.

## Revendications

1. Procédé pour assainir des conduites enfouies dans le sol dans lesquelles se trouvent des câbles à guide de lumière en utilisant un matériau de revêtement imprégné de résine et muni d'un film intérieur et d'un film extérieur,
selon lequel
un revêtement intérieur (1) ouvert dans la direction longitudinale, par les deux côtés (2) est introduit dans les éléments télescopiques (3) d'un dispositif en forme de segments de cercle, en fonction de la longueur et de la périphérie du tube respectif, et est replié sous celui-ci (5), et après introduction dans la conduite à assainir (6), les deux côtés par un mouvement de rotation, sont passés sous le câble (9) et sont fermés de manière étanche.

2. Dispositif pour la mise en oeuvre du procédé selon la revendication 1,
selon lequel
des éléments télescopiques (3), en forme de segments de cercle, sont montés avec des pinces de fixation (4) prévues aux extrémités ainsi que des tiges rondes, et une extrémité est reliée au segment intérieur des éléments télescopiques et l'autre extrémité est reliée à un arbre central (7) dirigé dans le sens de la longueur du canal.

3. Dispositif selon la revendication 2,
dans lequel
des ressorts (8) sont prévus dans le segment extérieur pour assister son ouverture.

4. Dispositif selon les revendications 2 et 3,
dans lequel
des tiges transversales (14) sont prévues pour éviter la poursuite de l'ouverture des éléments télescopiques (3) si ceux-ci réunissent le revêtement intérieur (1) par déviation du câble (9) non pas au sommet de la conduite (6) mais dans la voûte.

## Claims

1. Method for renovation of underground pipe ducts, in which optical conductor cables are disposed, with use of internal lining material saturated with resin and provided with an inner and an outer film, in which an internal liner (1) open in longitudinal direction is introduced at both sides (2) in elements (3), which are of circular segmental shape and telescopic in dependence on the length and the respective pipe circumference, of a device and is folded together (5) under this and after insertion into the pipe (6) to be renovated the two sides are led under the cable (9) by rotary movement and are sealingly closed.

2. Device for carrying out the method according to claim 1, in which telescopic elements (3) of circularly segmental shape with retaining clamps (4), which are arranged at the ends, as well as round rods are arranged, wherein one end is connected with the inner segment of the telescopic elements and the other end with a centre shaft (7) running along the length of the channel.

3. Device according to claim 2, in which springs (8) are mounted in the outer segment for assisting the expansion.

4. Device according to claims 2 and 3, in which transverse rods (14) are arranged for avoidance of further expansion of the telescopic elements (3), when - due to the deflection of the cable (9) - these bring the internal liner (1) together not at the crown of the pipe (6), but at the crossbar.
